# EUROPEAN PATENT SPECIFICATION

(11) **EP 1 848 285 B1**
(45) Date of publication and mention of the grant of the patent: **17.02.2010**
(21) Application number: 05817672.8
(22) Date of filing: 08.12.2005
(51) Int. Cl.: A23C 9/15, A23C 21/06

(54) **LOW-ENERGY, NON-FAT MILK BEVERAGE OF HIGH CALCIUM CONTENT, AND METHOD**
FETTFREIES MILCHGETRÄNK MIT NIEDRIGEM ENERGIE- UND HOHEM KALZIUMGEHALT, SOWIE VERFAHREN
BOISSON A BASE DE LAIT ECREME PEU ENERGETIQUE A FORTE TENEUR EN CALCIUM ET PROCEDE ASSOCIE

(30) Priority: 18.02.2005 FI 20055076
(43) Date of publication of application: 31.10.2007
(73) Proprietor: Valio Ltd., 00370 Helsinki (FI)
(72) Inventor: Hämäläinen, Tiina, FI-02400 Kirkkonummi (FI); TUURE, Tuula, FI-01900 Nurmijärvi (FI); KALLIOINEN, Harri, FI-04480 Haarajoki (FI); HARJU, Matti, FI-03100 Nummela (FI)
(74) Representative: Pitkänen, Kirsi-Marja
(86) International application number: PCT/FI2005/050454
(87) International publication number: WO 2006/087409

(56) References cited:
- EP-A- 0 226 035
- EP-A1- 0 741 976
- EP-A1- 1 224 868
- EP-A2- 0 203 706
- WO-A1-00/64267
- WO-A1-03/094623
- WO-A2-2004/075667
- GB-A- 2 180 733
- US-A- 5 558 897
- US-A- 5 897 892
- US-B1- 6 403 129
- DATABASE FSTA [Online] INTERNATIONAL FOOD INFORMATION SERVICE (IFIS), FRANkFURT-MAIN, DE; 1998, ROWAN C: "Protein the whey ahead." XP002488836 Database accession no. 1998-12-p1964 & ROWAN C.: "Protein the whey ahead" FOOD MANUFACTURE, vol. 73, no. 6, 1998, page 19,

## Description

### BACKGROUND OF THE INVENTION

The invention relates to a low-energy, non-fat milk beverage of high calcium content and to a method for preparing such a beverage.

There has been a clear interest in and a need for low-energy foodstuffs during recent years, obesity being at the same time a problem affecting increasing numbers of people in developed countries. Increasing weight problems especially among children and young people are of a particular interest in Finland as well.

A primary source of energy for humans consists of carbohydrates, proteins and fats. An essential aspect in weight loss is to reduce the amount of energy supplied by the diet. In obesity prevention, energy balance is the most critical factor. Reports from research made in recent years suggest that calcium, fibre, vitamin D and certain protein components of milk may have an effect on energy balance control.

Milk products are generally useful for lowering the glycaemic index of the diet. This means that the glucose level of blood after a meal does not rise as high as it would if the meal contained a lot of highly processed carbohydrates, i.e. products of high glycaemic index. A diet rich in products of high glycaemic index has been associated with central obesity, cardiovascular disease and type-2 diabetes.

WO 2004/075666 A2 relates to a reduced carbohydrate milk product and a method for preparing it. The raw material in this product is ultra filtered milk containing about 1 to 3% of carbohydrates, about 3 to 7% of proteins and 3 to 5% of fat. The milk product may also contain calcium, flavouring and sweeteners, for example. US 6,403,129 B1 discloses a carbonated fortified milk-based beverage for the supplementation of essential nutrients in the human diet. The beverage can contain about 2.1 mg to about 1400 mg of calcium per 354 ml of beverage solution. The beverage is reported to aid in the building of healthy bones and teeth and reduces the probability of developing osteoporosis. Carbonation of the beverage is intended to enhance taste, improve body and mouth-feel and in the stabilization of milk protein.

A number of researches have confirmed the positive effect of calcium contained in milk on weight control. High calcium intake from milk products seems both to prevent weight gain and to improve the results of dieting. Milk has a stronger effect than calcium and, as a part of a low-energy diet, it reinforces weight loss. In addition, a strong reverse correlation has been observed between regular and high consumption of milk products and the development of metabolic syndrome in overweight adults. It has also been noticed that an increase in calcium intake from food reduces the internal calcium content of fat cells, the low calcium content of the cells reducing lipogenesis. Consequently, the calcium content of a cell has been observed to control lipometabolism.

### BRIEF DESCRIPTION OF THE INVENTION

It is an object of the invention to provide a low-energy milk beverage of good organoleptic properties and a method for preparing the beverage. This is achieved by a milk beverage and a method characterized by what is stated in the independent claims. The preferred embodiments of the invention are disclosed in the dependent claims.

The invention is based on a surprising discovery according to which substances combined according to the invention provide dieters, consumers suffering from the metabolic syndrome, such as high blood pressure, or diabetics with a suitable extremely low-energy milk beverage having good organoleptic properties. To create a milk beverage that tastes good, has good organoleptic properties and contains 20 kcal/100g at the most, which is the definition for a low-energy product in Finland, poses a great challenge.

An advantage of the milk beverage of the invention is that it combines an optimal composition of nutrients that have a positive effect on weight control and on dietary treatment of diabetes and metabolic syndrome. The non-fat milk beverage of the invention has a low carbohydrate content and thereby an extremely low energy content, while its composition and taste still correspond to that of ordinary non-fat milk.

### BRIEF DESCRIPTION OF THE FIGURES

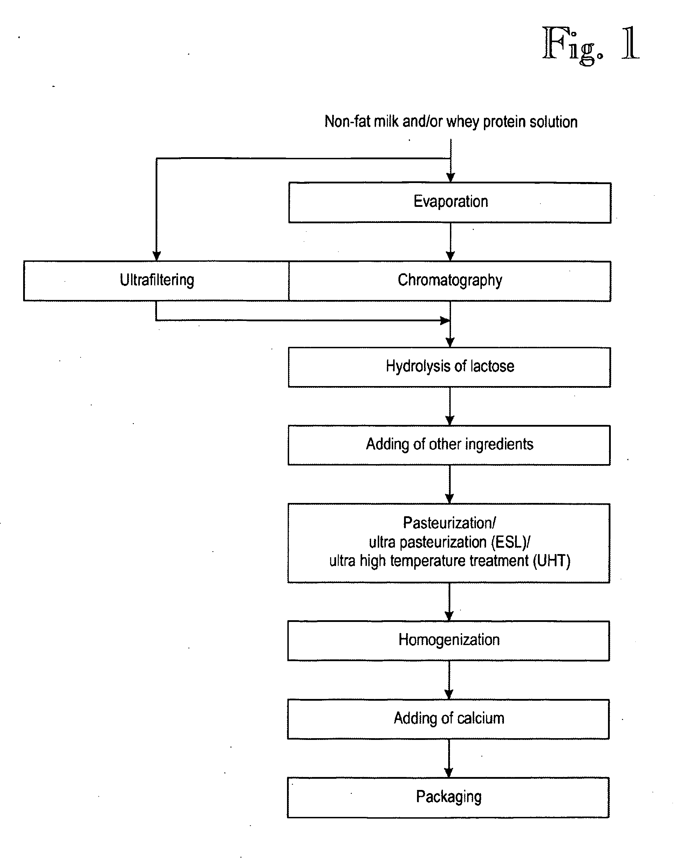

In the following the invention will be described in greater detail with reference to preferred embodiments. Figure 1 is a block diagram illustrating a method according to one embodiment of the invention.

### DETAILED DESCRIPTION OF THE INVENTION

The invention relates to a low-energy, non-fat milk beverage characterized in that it contains a low-energy milk base, which consists of non-fat milk, a whey protein solution, or a mixture of the two and from which carbohydrates have been removed either partly or totally, and in that it is rich in calcium.

The protein content of milk contains 80% of casein proteins and 20% of whey proteins. Due to its amino acid composition and satiety-increasing effect, a whey protein fraction included in foodstuffs has been observed to have an advantageous effect on the metabolic syndrome and weight control. Compared with caseins and other protein sources, whey protein increases satiety and reduces the amount of food intake during subsequent meals. Thus the raw material used in the milk beverage of the invention is non-fat milk, a whey protein solution, or a mixture combining the two in any proportion. The milk base preferably consists of 100 to 10% of non-fat milk and 0 to 90% of whey protein solution, more preferably 70 to 50% of non-fat milk and 30 to 50% of whey protein solution.

Since the milk beverage of the invention is fat-free, the amount of fat it contains is less than 0.5%.

Carbohydrates are removed from the above raw material either entirely or partly to produce a low-energy product. This is done either by ultrafiltration or chromatographically according to known methods such that the total energy content of the milk beverage does not exceed 20 kcal/100g.

Carbohydrates of milk are mainly derived from lactose. The preparation of a low-lactose or lactose-free milk product has been described in FI Application 20020907, for example. If lactose is removed by ultrafiltration, the salt content of the milk beverage must be returned to its original level by adding ordinary table salt or milk salts, for example. Preferably, only part of the lactose is removed such that the maximum final lactose content in the milk beverage of the invention is about 1.7g/100g of the milk beverage. If lactose is left in the final milk beverage, it is preferably hydrolysed to break down the lactose into glucose and galactose. Hydrolysis is achieved by means of lactase (β-galactosidase). Consequently, lactose contributes to the organoleptic properties of the milk beverage of the invention by providing sweetness and, thereby, improving the taste of the product.

The removal of carbohydrates or the reduction of an amount thereof from the raw material consisting of non-fat milk and/or whey protein results in what is known as a low-energy milk base. This milk base may then be complemented by soluble fibre. Fibre may have an impact on energy control through a plural number of mechanisms. First, fibre reduces the energy density of food. Fibre may also cause the stomach to expand due to increased salivation and secretion of gastric acid. Soluble fibre slows the evacuation of the stomach by forming a viscous gel matrix that contains nutrients and slows down the release of food from the stomach. This slows down digestion, whereby nutrients are absorbed more uniformly and the feeling of satiety lasts longer. Fibre may act on energy balance also through a hormonal mechanism. Fibre, and soluble fibre in particular, reduce the absorption of fat and protein possibly by reducing the physical contact between nutrients and the villi in the intestines.

The fibre in the milk beverage of the invention increases satiety by adding volume to the food mass. An increase in the daily intake of fibre reduces energy intake and thereby causes weight loss in the long term. Positive effects are achieved both by means of fibre obtained from natural sources and from a fibre supplement. Fibre also improves taste and thereby contributes to the organoleptic properties of the milk beverage of the invention. Examples of soluble fibre that may be added to the milk beverage of the invention include polydextrose, inulin, fructooligosaccharides, galactooligosaccharides, pectin, β-glucan, guar gum, xanthan gum, carrageen, and carob powder. Polydextrose is preferred. The maximum amount of added fibre is 3g/100g of the milk beverage, preferably 1.5g/100g.

The milk beverage of the invention is rich in calcium. As disclosed above, calcium has been discovered to have a positive effect on weight control. Calcium may be added to the milk beverage in different forms, for example in the form of Ca lactate gluconate, milk calcium, Ca gluconate, Ca lactate, Ca citrate or in some other soluble form of calcium salt. The milk beverage of the invention contains 120 to 240mg of calcium in 100g of the milk beverage, preferably 180mg/100g, which is 1.5 times the amount naturally contained in milk.

The milk beverage of the invention may also contain vitamin D. Vitamin D enhances calcium absorption and thereby, through calcium, has an indirect effect on energy balance. The amount of vitamin D in the milk beverage of the invention may be 0.1 to 1 µg/100g, preferably 0.5µg/100g.

To further improve the organoleptic properties of the milk beverage of the invention, salt, as mentioned earlier, sweeteners and flavours may also be added to the beverage. Examples of suitable sweeteners include fructose, sucralose, acesulfame-K, aspartame, saccharine, and cyclamate.

The invention also relates to a method for preparing a low-energy, non-fat milk beverage of a high calcium content as described above. The method is characterized in that
non-fat milk, a whey protein solution, or a mixture of the two is ultrafiltered or, alternatively, evaporated and subjected to chromatography to remove carbohydrates or to reduce the amount thereof;
any remaining carbohydrates are hydrolysed, if desired;
fibre and vitamin D as well as any other additives, such as water, salt, sweetener, flavour, and other vitamins, are added;
the mixture thus obtained is subjected to pasteurisation, ultra pasteurisation or ultra high temperature treatment at a temperature of 72 to 145°C;
the mixture is homogenised; and
calcium is added to the mixture.

In the method of the invention the raw material formed by the non-fat milk, the whey protein solution, or the mixture of the two is evaporated to a solids content of about 10 to 70%, preferably about 20 to 50%, more preferably about 30 to 40%. After the evaporation carbohydrates are removed from the concentrate or their amount is reduced by means of chromatography such that the total energy content of the remaining components does not exceed 20 kcal/100g. Alternatively, carbohydrates are removed from the raw material by ultrafiltration. Remaining carbohydrates, i.e. mainly lactose, are preferably hydrolysed to introduce sweetness into the milk beverage and thereby improve its taste. If desired, salts, sweeteners and flavour may be added to the milk beverage to further improve its organoleptic properties. The mixture is then subjected to pasteurisation, ultra pasteurisation (ESL) or ultra high temperature treatment (UHT) at a temperature of 72 to 145°C and homogenized in a pressure of 100 to 160 bars. Finally, calcium is added. To prevent proteins from precipitating in the thermal processing, this must be done after pasteurisation.

The following examples illustrate the invention.

### Example 1

The raw material used in the milk beverage of the invention ("weight control drink") is non-fat milk. A portion of the carbohydrates contained therein is removed by means of chromatographic separation or by ultrafiltration.

### 1. A milk protein solution prepared by means of chromatography

Non-fat milk is evaporated to a dry solids content of 30g/100g. A protein fraction having a carbohydrate (lactose) content of about 1.6g/100g and containing most of the milk salts is separated from the evaporated milk by means of chromatography. The compositions of the feed solution and the protein fraction are given in Table 1

**Table 1**

| | Feed solution | Protein fraction |
|---|---|---|
| Dry solids (g/100g) | 30.0 | 8.9 |
| Protein (g/100g) | 11.0 | 5.9 |
| Fat (g/100g) | 0.3 | 0.1 |
| Carbohydrates (g/100g) | 16.3 | 1.6 |
| Ash content (%) | 2.6 | 1.3 |
| Calcium (ppm) | 4000 | 2000 |

2. A milk protein concentrate prepared by means of ultrafiltration Non-fat milk is supplied through an ultrafiltration device to obtain a retentate containing mainly milk proteins, lactose and a portion of the milk salts. The composition of the UF-retentate (the milk protein concentrate) is given in Table 2.

**Table 2**

| | Milk protein concentrate |
|---|---|
| Dry solids (g/100g) | 19.8 |
| Protein (g/100g) | 12.3 |
| Fat (g/100g) | 0.2 |
| Carbohydrates (g/100g) | 5.4 |
| Ash content (%) | 1.6 |
| Calcium (ppm) | 3800 |

The milk beverage of the invention is composed according to the following recipe:

| | |
|---|---|
| 27.000% | milk protein solution |
| 15.000% | milk protein concentrate |
| 55.472% | water |
| 0.200% | milk salts (Milk Mineral Powder, Valio Oy) |
| 0.657% | calcium lactate gluconate (Puracal Xperform, Purac) |
| 1.670% | polydextrose (Litesse Ultra, Danisco) |
| 0.001% | vitamin D solution (Kemikalia) |

The milk protein solution and the milk protein concentrate are hydrolysed enzymatically by means of a lactase enzyme in a container at a temperature of about 10°C for about 10 hours. After the hydrolysis, water, milk salts and polydextrose are added under stirring to the milk protein mixture in the container. The solution is supplied through an ultra pasteurisation device (ESL, temperature 127°C, duration < 1 sec.) and a homogeniser (pressure 160 bars). The calcium lactate gluconate is dissolved in hot water (in a proportion of 1:4 by mass) in a separate container and the solution is pumped into the milk-based solution into the product flow. The entire product is pumped into an aseptic package and forwarded to packaging. As a result, a milk beverage of the invention having a composition as shown in Table 3 is obtained.

**Table 3**

| | Weight control drink |
|---|---|
| Energy (kcal/100g) | 20 |
| Protein (g/100g) | 3.4 |
| Fat (g/100g) | 0.05 |
| Carbohydrate (g/100g) | 1.2 |
| of which lactose (g/100g) | < 0.01 |
| Calcium (mg/100g) | 180 |
| Soluble fibre (g/100g) | 1.5 |
| Vitamin D (µg/100g) | 0.5 |
| Ash (g/100g) | 0.7 |

The organoleptic properties of the product were considered good. Mouthfeel was described milky and the taste fresh and neutral. No off flavours were observed.

### Example 2

The raw material in the milk beverage of the invention ("weight control drink") is non-fat milk and a whey protein solution in a proportion of 10:90. The product is prepared by removing most of the carbohydrates in the non-fat milk and the whey protein solution by means of chromatographic separation.

Sweet whey obtained in cheese manufacture is nanofiltered to produce a whey protein solution in which the amount of whey proteins is about 3.3g/100g. The whey protein solution in question and the non-fat milk are combined so that about 10% of the total protein content of the mixture consists of proteins obtained from the non-fat milk and about 90% from proteins of the whey protein solution.

The milk protein-whey protein solution is evaporated to a dry solids content of about 40g/100g. A protein fraction having a carbohydrate (lactose) content of about 1.6g/100g and containing a portion of the salts of the milk and the whey is separated chromatographically from the evaporated mixture. The compositions of the feed solution and the protein fraction are given in Table 4.

**Table 4**

| | Feed solution | Protein fraction |
|---|---|---|
| Dry solids (g/100g) | 40.0 | 6.8 |
| Protein (g/100g) | 7.5 | 4.0 |
| Fat (g/100g) | 0.3 | 0.1 |
| Carbohydrates (g/100g) | 28.8 | 1.6 |
| Ash content (%) | 2.2 | 1.1 |
| Calcium (ppm) | 5200 | 2600 |

The milk beverage of the invention is composed according to the following recipe:

| | |
|---|---|
| 79.000% | protein fraction |
| 19.329% | water |
| 1.670% | polydextrose (Litesse Ultra, Danisco) |
| 0.001% | vitamin D solution (Kemikalia) |

The protein fraction is hydrolysed enzymatically (by means of a lactase enzyme) in a container at a temperature of about 10°C for about 10 hours. After the hydrolysis, water and polydextrose are added under stirring to the protein mixture in the container. The solution is supplied through an ultra pasteurisation device (ESL, temperature 127°C, duration < 1 sec.) and a homogeniser (pressure 160 bars). The calcium lactate gluconate is dissolved in hot water (in a proportion of 1:4 by mass) in a separate container and the solution is pumped into the milk-based solution into the product flow. The entire product is pumped into an aseptic package and forwarded to packaging. As a result, a milk beverage of the invention having a composition as shown in Table 5 is obtained.

**Table 5**

| | Weight control drink |
|---|---|
| Energy (kcal/100g) | 20 |
| Protein (g/100g) | 3.2 |
| Fat (g/100g) | 0.08 |
| Carbohydrate (µg/100g) | 1.3 |
| of which lactose (g/100g) | < 0.01 |
| Calcium (mg/100g) | 205 |
| Soluble fibre (g/100g) | 1.5 |
| Vitamin D (µg/100g) | 0.5 |
| Ash (g/100g) | 0.9 |

The organoleptic properties of the product were considered good. Mouthfeel was described milky, slightly more watery than that of the product of Example 1. The taste was fresh and neutral. No off flavours were observed.

### Example 3

The raw material in the milk beverage of the invention ("weight control drink") is non-fat milk and a whey protein solution in a proportion of 60:40. The product is prepared by removing a portion of the carbohydrates in the non-fat milk and the whey protein solution by means of a chromatographic separation.

Sweet whey obtained in cheese manufacture is nanofiltered to produce a whey protein solution in which the amount of whey proteins is about 3.3g/100g. The whey protein solution in question and the non-fat milk are combined so that about 60% of the total protein content of the mixture consists of proteins obtained from the non-fat milk and about 40% of the proteins from the whey protein solution.

The milk protein-whey protein solution is evaporated to a dry solids content of about 35g/100g. A protein fraction having a carbohydrate (lactose) content of about 1.6g/100g and containing a portion of the salts of the milk and the whey is separated chromatographically from the evaporated mixture. The compositions of the feed solution and the protein fraction are given in Table 6.

**Table 6**

| | Feed solution | Protein fraction |
|---|---|---|
| Dry solids (g/100g) | 35.0 | 7.3 |
| Protein (g/100g) | 8.1 | 4.5 |
| Fat (g/100g) | 0.3 | 0.1 |
| Carbohydrates (g/100g) | 23.0 | 1.6 |
| Ash content (%) | 2.3 | 1.1 |
| Calcium (ppm) | 4500 | 2300 |

The milk beverage of the invention is composed according to the following recipe:

| | |
|---|---|
| 74.000% | protein fraction |
| 24.236% | water |
| 1.670% | polydextrose (Litesse Ultra, Danisco) |
| 0.093% | calcium lactate gluconate (Puracal Xperform, Purac) |
| 0.001% | vitamin D solution (Kemikalia) |

The protein fraction is hydrolysed enzymatically (by means of a lactase enzyme) in a container at a temperature of about 10°C for about 10 hours. After the hydrolysis, water and polydextrose are added under stirring to the protein mixture in the container. The solution is supplied through an ultra pasteurisation device (ESL, temperature 127°C, duration < 1 sec.) and a homogeniser (pressure 160 bars). The calcium lactate gluconate is dissolved in hot water (in a proportion of 1:4 by mass) in a separate container and the solution is pumped into the milk-based solution into the product flow. The entire product is pumped into an aseptic package and forwarded to packaging. As a result, a milk beverage of the invention having a composition as shown in Table 7 is obtained.

**Table 7**

| | Weight control drink |
|---|---|
| Energy (kcal/100g) | 20 |
| Protein (g/100g) | 3.3 |
| Fat (g/100g) | 0.07 |
| Carbohydrate (g/100g) | 1.3 |
| of which lactose (g/100g) | < 0.01 |
| Calcium (mg/100g) | 180 |
| Soluble fibre (g/100g) | 1.5 |
| Vitamin D (µg/100g) | 0.5 |
| Ash (g/100g) | 0.8 |

The organoleptic properties of the product were considered good. Mouthfeel was described milky. The taste was fresh and neutral. No off flavours were observed.

## Claims

1. A stabilizer-free, low-energy, non-fat milk beverage of a high calcium content, **characterized in that** it contains a low-energy milk base that consists of non-fat milk, a whey protein solution or a mixture of the two and from which carbohydrates have been removed either entirely or partly, and added calcium, the amount of calcium being 180 to 240mg/100g of the milk beverage, and that its energy content is 20kcal/100g at the most.

2. A milk beverage according to claim 1, **characterized in that** the milk base contains 100 to 10% of non-fat milk and 0 to 90% of whey protein solution, preferably 70 to 50% of non-fat milk and 30 to 50% of whey protein solution.

3. A milk beverage according to claim 1 or 2, **characterized in that** carbohydrates have been removed either entirely or partly, their amount in the final product being 1.7g/100g at the most.

4. A milk beverage according to claim 3, **characterized in that** the remaining carbohydrates are hydrolysed.

5. A milk beverage according to any one of claims 1 to 4, **characterized in that** the amount of fat contained is less than 0.5g/100g of the milk beverage.

6. A milk beverage according to any one of claims 1 to 5, **characterized in that** it further contains soluble fibre in an amount of up to 3g/100g, preferably 1.5g/100g of the milk beverage.

7. A milk beverage according to claim 6, **characterized in that** the fibre is polydextrose.

8. A milk beverage according to any one of claims 1 to 7, **characterized in that** it further contains vitamin D the in an amount of 0.1 to 1 µg/100g, preferably 0.5µg/100g, of the milk beverage.

9. A method for preparing a milk beverage according to any one of claims 1 to 8, **characterized in that**
non-fat milk, a whey protein solution or a combination of the two is ultrafiltered or, alternatively, evaporated and subjected to chromatography to remove carbohydrates or to reduce the amount thereof;
any remaining carbohydrates are hydrolysed, if desired;
fibre, vitamin D and other optional additives, such as water, salt, sweetener, flavour and other vitamins are added;
the mixture thus obtained is subjected to pasteurisation, ultra pasteurisation or ultra high temperature treatment at 72 to 145°C;
the mixture is homogenised; and
calcium is added to the mixture.

10. A method according to claim 9, **characterized in that** the non-fat milk, the whey protein solution or the mixture thereof is evaporated to a dry solids content of 10 to 70%, preferably 20 to 50%, more preferably 30 to 40%.

## Patentansprüche

1. Stabilisatorfreies fettfreies Milchgetränk mit niedrigem Energie- und hohem Kalziumgehalt, **dadurch gekennzeichnet, dass** es eine Milchbasis mit niedrigem Energiegehalt, die aus fettfreier Milch, einer Molkenproteinlösung oder deren Gemisch besteht und aus der Kohlenhydrate entweder vollständig oder teilweise entfernt worden sind, und zugesetztes Kalzium enthält, wobei die Kalziummenge 180 bis 240 mg/100g Milchgetränk beträgt, und dass sein Energiegehalt höchstens 20 kcal/100g beträgt.

2. Milchgetränk nach Anspruch 1, **dadurch gekennzeichnet, dass** die Milchbasis 100 bis 10% fettfreie Milch und 0 bis 90% Molkenproteinlösung, vorteilhaft 70 bis 50% fettfreie Milch und 30 bis 50% Molkenproteinlösung, enthält.

3. Milchgetränk nach Anspruch 1 oder 2, **dadurch gekennzeichnet, dass** Kohlenhydrate entweder vollständig oder teilweise entfernt worden sind, wobei ihre Menge im Endprodukt höchstens 1,7g/100g beträgt.

4. Milchgetränk nach Anspruch 3, **dadurch gekennzeichnet, dass** die restlichen Kohlenhydrate hydrolysiert sind.

5. Milchgetränk nach einem der Ansprüche 1 bis 4, **dadurch gekennzeichnet , dass** die enthaltene Fettmenge weniger als 0,5g/100g Milchgetränk beträgt.

6. Milchgetränk nach einem der Ansprüche 1 bis 5, **dadurch gekennzeichnet, dass** es ferner lösliche Fasern in einer Menge bis zu 3g/100g, vorteilhaft 1,5g/100g, Milchgetränk enthält.

7. Milchgetränk nach Anspruch 6, **dadurch gekennzeichnet, dass** die Faser Polydextrose ist.

8. Milchgetränk nach einem der Ansprüche 1 bis 7, **dadurch gekennzeichnet, dass** es ferner Vitamin D in einer Menge von 0,1 bis 1 µg/100g, vorteilhaft 0,5 µg/100g, Milchgetränk enthält.

9. Verfahren zur Herstellung eines Milchgetränks nach einem der Ansprüche 1 bis 8, **dadurch gekennzeichnet , dass**
fettfreie Milch, eine Molkenproteinlösung oder deren Gemisch ultrafiltert oder alternativ verdampft und einer Chromatographie unterworfen wird, um Kohlenhydrate zu entfernen oder deren Menge zu vermindern;
eventuelle restliche Kohlenhydrate gegebenenfalls hydrolysiert werden;
Faser, Vitamin D und andere beliebige Additive wie Wasser, Salz, Süßstoff, Aromastoff und übrige Vitamine zugesetzt werden;
das somit erhaltene Gemisch einer Pasteuerisierung, Ultra-Pasteurisierung oder Ultrahochtemperaturbehandlung bei 72 bis 145°C unterworfen wird;
das Gemisch homogenisiert wird; und
Kalzium dem Gemisch zugesetzt wird.

10. Verfahren nach Anspruch 9, **dadurch gekennzeichnet , dass** die fettfreie Milch, die Molkenproteinlösung oder deren Gemisch auf einen Trockenstoffgehalt von 10 bis 70%, vorteilhaft 20 bis 50%, vorteilhafter 30 bis 40%, verdampft wird.

## Revendications

1. Boisson lactée sans stabilisant, peu énergétique et sans matière grasse, ayant une grande teneur en calcium, **caractérisée en ce qu'**elle contient une base lactée peu énergétique qui consiste en du lait sans matière grasse en une solution de protéine de lactosérum ou en un mélange des deux et dont des hydrates de carbone ont été enlevés en tout ou partie, et en du calcium ajouté, la quantité de calcium étant comprise entre 180 et 240 mg/100g de la boisson lactée, et qui a une teneur en énergie de 20 kcal/100g au plus.

2. Boisson lactée suivant la revendication 1,
**caractérisée en ce que** la base lactée contient de 100 à 10% de lait sans matière grasse et de 0 à 90% de solution de protéine de lactosérum, de préférence de 70 à 50% de lait sans matière grasse et de 30 à 50% de solution de protéine de lactosérum.

3. Boisson lactée suivant la revendication 1 ou 2, **caractérisée en ce que** les hydrates de carbone ont été enlevés en tout ou partie, leur quantité dans le produit final étant de 1,7 g/100g au plus.

4. Boisson lactée suivant la revendication 3,
**caractérisée en ce que** les hydrates de carbone restant sont hydrolysés.

5. Boisson lactée suivant l'une quelconque des revendications 1 à 4, **caractérisée en ce que** la quantité de matière grasse contenue est inférieure à 0,5g/100g de la boisson lactée.

6. Boisson lactée suivant l'une quelconque des revendications 1 à 5, **caractérisée en ce qu'**elle contient, en outre, de la fibre soluble en une quantité allant jusqu'à 3g/100g, de préférence en une quantité de 1,5g/100g de la boisson lactée.

7. Boisson lactée suivant la revendication 6,
**caractérisée en ce que** la fibre est du polydextrose.

8. Boisson lactée suivant l'une quelconque des revendications 1 à 7, **caractérisée en ce qu'**elle contient, en outre, de la vitamine D en une quantité de 0,1 à 1 µg/100g, de préférence en une quantité de 0,5 µg/100g de la boisson lactée.

9. Procédé de préparation d'une boisson lactée suivant l'une quelconque des revendications 1 à 8, **caractérisée en ce que**
on ultrafiltre du lait sans matière grasse, une solution de protéine de lactosérum ou un mélange des deux ou, en variante, on l'évapore et on le soumet à une chromatographie pour enlever les hydrates de carbone ou pour en réduire la quantité ;
on hydrolyse tout hydrate de carbone restant si on le souhaite ;
on ajoute de la fibre, de la vitamine D et d'autres additifs facultatifs, tels que de l'eau, du sel, un édulcorant, un aromatisant et d'autres vitamines ;
on soumet le mélange ainsi obtenu à une pasteurisation, à une ultra pasteurisation ou à un traitement à une température ultra haute entre 72 et 145°C ;
on homogénéise le mélange ; et
on ajoute du calcium au mélange.

10. Procédé suivant la revendication 9, **caractérisé en ce que** l'on évapore le lait sans matière grasse, la solution des protéines de lactosérum ou leur mélange jusqu'à une teneur en matière solide de 10 à 70%, de préférence, de 20 à 50%, et mieux de 30 à 40%.
